**Europäisches Patentamt**

**European Patent Office**

**Office européen des brevets**

(11) Numéro de publication: **0 250 293**
**B1**

(12) **FASCICULE DE BREVET EUROPEEN**

(45) Date de publication du fascicule du brevet:
16.08.89

(51) Int. Cl.⁴: **B64C 9/10, B64C 13/28**

(21) Numéro de dépôt: **87401289.1**

(22) Date de dépôt: **09.06.87**

(54) **Système pour la commande d'une surface aérodynamique mobile d'un aéronef.**

(30) Priorité: **16.06.86 FR 8608652**

(43) Date de publication de la demande:
**23.12.87 Bulletin 87/52**

(45) Mention de la délivrance du brevet:
**16.08.89 Bulletin 89/33**

(84) Etats contractants désignés:
**DE ES GB IT NL SE**

(56) Documents cités:
**FR-A- 1 142 454**
**US-A- 2 623 717**
**US-A- 3 790 108**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Bellego, Roger, 3 Place Corps Franc Pommies, F-31700 Blagnac(FR)**
Inventeur: **Foch, Etienne, 15 bis rue Laganne, F-31300 Toulouse(FR)**

(74) Mandataire: **Bonnetat, Christian et al, Cabinet PROPI Conseils 23 rue de Léningrad, F-75008 Paris(FR)**

## Description

La présente invention concerne un système pour la commande d'une surface aérodynamique mobile d'un aéronef.

On sait que, notamment dans le cas d'un avion sans servocommandes, on prévoit un volet compensateur, communément appelé "tab" en aéronautique, sur certaines surfaces aérodynamiques dudit avion, telles que par exemple la gouverne de direction, les gouvernes de profondeur, les ailerons, etc... Ce volet compensateur est destiné à réduire les efforts de manoeuvre que le pilote doit exercer sur une telle surface aérodynamique pour la braquer et il est articulé sur le bord de fuite de celle-ci.

Dans certains systèmes de commande connus, dits "a tab à ressort", ladite surface aérodynamique mobile à commander est librement articulée autour de son axe de braquage, tandis qu'une liaison élastique est prévue entre ledit volet compensateur et ladite surface aérodynamique et que ledit volet compensateur est directement actionné par le pilote, par l'intermédiaire d'un organe d'actionnement volontaire (manche à balai, palonnier) et d'une timonerie. Ainsi, le braquage de la gouverne est obtenu par commande du volet compensateur et transmission par ladite liaison élastique. On remarquera que, grâce à l'action de la liaison élastique, l'assistance aérodynamique donnée par le volet compensateur au pilote est d'autant plus grande que l'effort de commande dudit volet est plus importante.

Par ailleurs, on sait qu'il est courant d'équilibrer une surface aérodynamique braquée, afin de maintenir l'avion sur sa trajectoire et de permettre au pilote de relâcher son effort de commande. Cette fonction d'équilibrage est désignée sous le terme de "trim".

Dans certains systèmes de commande à volet compensateur, du type dit "trim tab", tels que celui décrit par le brevet US-A-2 843 344, il est déjà connu de prévoir une telle fonction d'équilibrage. Toutefois, dans ce cas, lesdits systèmes ne sont pas du type "tab à ressort" décrit ci-dessus, mais du type dans lequel l'organe d'actionnement volontaire et la timonerie agissent directement sur la gouverne (et non pas sur le volet compensateur comme dans le cas d'un "tab à ressort") et dans lequel un couplage mécanique existe entre ledit volet compensateur et ladite surface aérodynamique mobile. En effet, la liaison élastique prévue dans lesdits systèmes "à tab à ressort" introduit un paramètre de liberté supplémentaire par rapport aux systèmes à couplage mécanique, de sorte que cette liaison élastique est à l'origine de vibrations aérodynamiques peu appropriés à la mise en oeuvre d'une fonction d'équilibrage.

En conséquence, jusqu'à présent, lorsque sur un aéronef on désirait à la fois les fonctions "tab à ressort" et "trim tab", on était obligé d'appliquer la fonction "tab à ressort" sur certaines surfaces aérodynamiques mobiles et la fonction "trim tab" sur d'autres surfaces aérodynamiques pourvues de volets compensateurs respectivement reliés mécaniquement à celles-ci. Ainsi, cette solution actuelle est-elle compliquée et coûteuse, d'autant plus que bien souvent il est nécessaire de prévoir un système additionnel de stabilisation artificielle.

La présente invention a pour object de remédier à cet inconvénient et de permettre l'équilibrage aérodynamique d'une surface aérodynamique pourvue d'un volet compensateur, auquel elle est reliée par une liaison élastique.

A cette fin, selon l'invention, le système pour la commande d'une surface aérodynamique montée mobile sur un aéronef de façon à pouvoir librement pivoter autour d'un axe fixe et pourvue d'un volet compensateur lui-même articulé sur le bord de fuite de ladite surface aérodynamique, ledit système étant tel que des moyens élastiques de liaison sont prévus entre ledit volet compensateur et ladite surface aérodynamique et que ledit volet compensateur est directement actionnable par le pilote, par l'intermédiaire d'un organe d'actionnement volontaire et d'une timonerie, est caractérisé :
- en ce qu'il comporte
  . un actuateur interposé entre lesdits moyens élastiques de liaison et ladite surface aérodynamique ;
  . un dispositif de commande dudit actuateur ; et
  . un embrayage reliant la structure de l'aéronef à ladite timonerie ;
- et en ce que ledit dispositif de commande de l'actuateur commande également ledit embrayage, de façon que celui-ci soit en position débrayée lorsque ledit actuateur est actif et en position embrayée lorsque ledit actuateur est inactif.

Ainsi, lorsque le pilote désire braquer ladite surface aérodynamique, il agit sur ledit organe d'actionnement volontaire de façon correspondante, tout en commandant ledit actuateur de façon que celui-ci agisse dans le même sens, ce qui, simultanément, fait passer l'embrayage en position débrayée. Par suite, ledit volet compensateur est braqué et lesdits moyens élastiques sont déformés. Sous l'action principale des forces aérodynamiques agissant sur ledit volet compensateur et sous l'action auxiliaire desdits moyens élastiques et dudit actuateur, ladite surface aérodynamique prend alors la position braquée commandée. Lorsque celle-ci est atteinte, le pilote agit sur la commande dudit actuateur pour que celui-ci garde la position qu'il vient d'atteindre et devienne inactif, ce qui, simultanément, fait passer l'embrayage en position embrayée. La surface aérodynamique est alors en position d'équilibrage aérodynamique et le pilote peut relâcher son effort sur l'organe d'actionnement, puisque cette position d'équilibrage est maintenue par ledit actuateur et par ledit embrayage.

On remarquera que l'invention permet l'équilibrage aérodynamique de ladite surface à laquelle est associé ledit volet compensateur, bien que l'on utilise une liaison élastique, source de vibrations, entre la surface et le volet. En effet, selon l'invention, lesdites vibrations, telles que celles mentionnées précédemment, n'apparaissent plus, puisque, lorsque le pilote désire garder une position de braquage de la surface afin de relâcher son effort sur l'organe d'actionnement volontaire, ledit embrayage est dans la position embrayée, ce qui a pour conséquence de solidariser de la structure de l'aéronef la timonerie liée à la liaison élastique. On obtient ainsi un équilibrage aérodynamique efficace et rigide sans vibrations parasites dues à la liaison élastique.

De préférence, entre ladite timonerie et ledit embrayage est prévu un dispositif à seuil permettant, lorsque ledit embrayage est en position embrayée, un déplacement relatif de la timonerie, si le pilote exerce sur ledit organe de commande volontaire un effort supérieur à un seuil déterminé.

Ainsi, en cas de nécessité, même en position équilibrée braquée de la surface aérodynamique, le pilote peut modifier le braquage de la surface aérodynamique en exerçant sur ledit organe de commande volontaire, un effort supérieur à celui correspondant audit seuil, bien que l'embrayage soit en position embrayée.

Le pilote a en conséquence la possibilité de modifier le braquage de la surface aérodynamique soit en agissant sur le dispositif de commande simultané de la mise en action de l'actuateur et de la libération de l'embrayage, soit en agissant directement sur la timonerie par l'intermédiaire de l'organe d'actionnement volontaire en exerçant sur celui-ci un effort supérieur audit seuil déterminé.

Dans une forme préférée de réalisation, ledit dispositif à seuil comporte un moyen élastique, tel que par exemple un ressort, fournissant le seuil d'effort, et les extrémités de ce moyen élastique sont reliées respectivement aux extrémités des branches d'un ciseau aptes à pivoter autour d'un arbre solidaire de la structure de l'aéronef, les extrémités libre opposées aux précédentes desdites branches coopérant respectivement avec ladite timonerie et avec ledit embrayage.

Selon une autre caractéristique de l'invention, on prévoit des moyens d'alignement automatique de l'embrayage avec la dernière position occupée par ladite timonerie correspondant à la dernière position occupée par ladite surface aérodynamique. Avantageusement, ces moyens d'alignement automatique mettent en oeuvre ledit moyen élastique générateur du seuil d'effort, ainsi que les extrémités libres des branches dudit ciseau, opposées à celles reliées audit moyen élastique, qui, à cet effet, coopèrent respectivement avec ladite timonerie et avec ledit embrayage.

Ainsi, le pilote est assuré que ledit embrayage, dès qu'il est en position débrayée et avant de basculer dans sa position embrayée verrouillant la timonerie, est aligné avec la dernière position occupée par celle-ci, grâce à l'action du moyen élastique relié auxdites branches coopérant avec lesdits moyens d'alignement. Il en résulte de plus que la valeur dudit seuil d'effort, que le pilote doit vaincre lors d'une commande volontaire destinée à modifier le braquage de la surface aérodynamique, est toujours identique et ce quelle que soit la position occupée initialement par ladite timonerie.

Dans une forme préférée de réalisation, lesdits moyens d'alignement comportent deux pions, dont l'un est solidaire d'un levier monté rotatif autour dudit arbre de rotation du ciseau, ledit levier étant articulé à ladite timonerie, et dont l'autre est solidaire dudit embrayage, les extrémités libres desdites branches du ciseau étant disposées de part et d'autre desdits pions, pressées vers ceux-ci par ledit moyen élastique générateur de seuil et susceptibles chacune de s'appliquer sur les deux pions.

Ainsi, de cette façon, lorsque le levier, à la suite du déplacement de la timonerie occasionné par un effort exercé par le pilote sur ledit organe de commande, pivote autour dudit arbre solidaire de la structure de l'aéronef, il entraîne en rotation, par l'intermédiaire du pion fixé à celui-ci, l'extrémité libre de la branche correspondante du ciseau. Donc, dès que le pilote veut équilibrer la surface aérodynamique dans la nouvelle position braquée et, pour cela agit sur la commande de l'actuateur et donc débraye l'embrayage, l'action du ressort reliant les deux branches du ciseau ramène la branche du ciseau liée audit embrayage vers ladite position d'équilibre, jusqu'à ce que les deux pions soient de nouveau alignés. Par l'intermédiaire du dispositif de commande, le pilote verrouille ensuite l'embrayage dans la position embrayée correspondant à la dernière position occupée par la surface aérodynamique liée à la timonerie.

Ledit dispositif de commande de l'actuateur et de l'embrayage peut être avantageusement constitué d'une manette de commande susceptible d'être actionnée par le pilote, ladite manette pouvant occuper d'une part, une position de repos, pour laquelle ledit embrayage est en position embrayée et ledit actuateur inactif et d'autre part, deux positions de travail pour lesquelles ledit embrayage est en position débrayée et ledit actuateur actif, chacune desdites positions de travail correspondant à un sens de braquage de ladite surface aérodynamique.

De préférence, pour chaque position de travail, ladite manette peut être basculée sur l'un de deux contacteurs électriques disposés en parallèle et alimentés par une alimentation électrique unique.

Dans un mode avantageux de réalisation, ledit système comporte une unité rassemblant ledit embrayage, ledit moyen élastique à seuil d'effort, et lesdits moyens d'alignement automatique de la position de l'embrayage avec la dernière position occupée par ladite timonerie correspondant à la dernière position de la surface mobile.

Les figures du dessin annexé feront bien comprendre comment l'invention peut être réalisée. Des références identiques désignent des éléments semblables.

La figure 1 illustre en perspective un aéronef équipé d'une gouverne de direction pourvue d'un volet compensateur.

La figure 2 illustre schématiquement un exemple de réalisation du système selon l'invention.

Les figures 3, 4 et 5 illustrent en vues de dessus agrandies, des détails de réalisation du système correspondant respectivement aux lignes de coupe III-III, IV-IV et V-V.

La figure 6 représente, en perspective partiellement écorchée, un mode de réalisation préféré de l'unité combinée d'embrayage, de seuil d'effort et d'alignement dudit système.

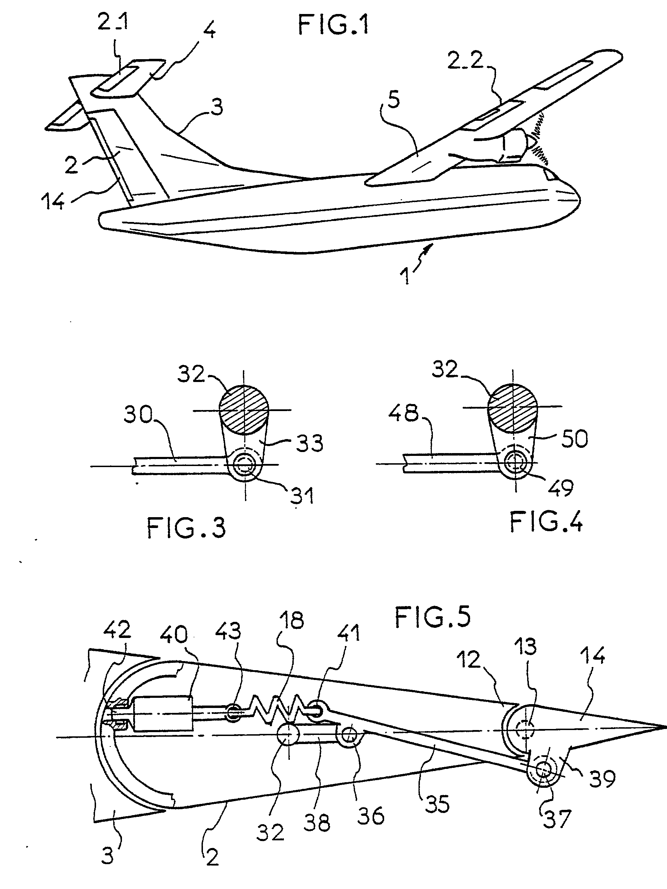

Le système selon l'invention est destiné à la commande d'une surface aérodynamique montée mobile sur un aéronef tel que celui représenté sur la figure 1 et désigné par la référence 1. Le système de l'invention est du type associant les fonctions "tab à ressort" et "trim tab" sur une même surface aérodynamique, fonctions définies ci-dessus, ledit système s'appliquant notamment aux aéronefs sans servo-commande.

Sur la figure 1, la surface aérodynamique mobile 2 est, par exemple, la gouverne de direction articulée à l'arrière de l'empennage vertical 3 de l'aéronef 1.

Bien entendu, ledit système pourrait s'appliquer également à d'autres surfaces aérodynamiques mobiles, telles que les gouvernes de profondeur 2-1 articulées à l'empennage horizontal 4 et les ailerons ou volets 2-2 articulés aux ailes 5 de l'aéronef 1.

Comme on peut le voir sur la figure 2, la surface aérodynamique ou gouverne 2 est montée mobile, autour d'un axe de braquage 10, à la partie arrière 11 de l'empennage 3. De même, du côté du bord de fuite 12 de la gouverne 2 est articulé, autour d'un axe 13, un volet compensateur 14, désigné généralement sous le nom de "tab" et destiné à réduire les efforts de manoeuvre que le pilote doit exercer sur la gouverne 2 pour la braquer. Ce volet compensateur 14 est, dans le système selon l'invention, directement actionné par le pilote de l'aéronef au moyen d'un organe d'actionnement volontaire 16 et d'une timonerie 17. Dans cette configuration, un moyen élastique de liaison, tel qu'un ressort 18, est disposé entre le volet compensateur 14 et la gouverne 2. Le braquage de la gouverne 2 autour de l'axe 10 est obtenu par la commande du volet 14, au moyen de l'organe d'actionnement 16 et de la timonerie 17, et par l'intermédiaire du ressort 18.

Plus précisément, l'organe d'actionnement 16 est, dans l'exemple représenté, un palonnier 20 comportant deux pédales 21 et 21-1 reliées à la structure 8 de l'aéronef par des articulations respectivement 22 et 22-1. Chaque pédale, lorsqu'elle est actionnée par le pilote, agit sur la timonerie 17 dans l'un des deux sens de déplacement de celle-ci, grâce à un jeu de biellettes 23 articulées les unes aux autres.

La timonerie 17 comporte une transmission par câble 24 comprenant deux secteurs angulaires 26, distants l'un de l'autre, et montés chacun autour d'un arbre 27 lié à la structure 8 de l'aéronef. Le premier secteur 26 est relié au jeu de biellettes 23 au moyen d'un axe 28 et le second secteur 26 est relié à une extrémité d'une bielle 30 au moyen d'un axe 29.

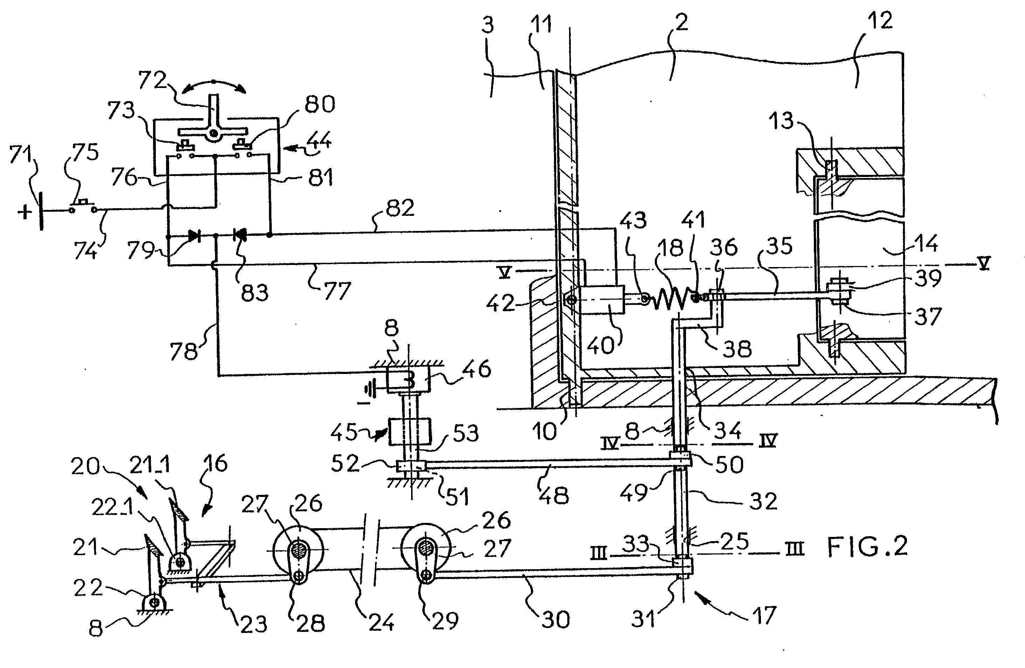

L'extrémité opposée de la bielle 30 (figures 2 et 3) est articulée en 31 à une tige 32 par l'intermédiaire d'une patte excentrée 33. La tige 32 est disposée sensiblement perpendiculairement à la bielle 30, et pénètre par son extrémité opposée dans la gouverne 2 grâce à des passages 34 ménagés dans la structure 8 de l'aéronef et dans la base de la gouverne 2. Cette tige 32 peut tourner autour de son axe grâce à des paliers 25 ménagés dans la structure 8, et est articulée en 36 sur une bielle 35 par l'intermédiaire d'une manivelle 38 ; la bielle 35 est reliée à ses extrémités d'une part, à une patte excentrée 39 du volet compensateur 14 par une articulation 37 et d'autre part, à une première extrémité du ressort 18 par une liaison 41 (figures 2 et 5).

Le système selon l'invention, comporte un actuateur, par exemple un vérin électrique 40, interposé etnre le ressort 18 et la gouverne 2. Le vérin 40 est articulé en 42 à la gouverne 2 et relié en 43 à la seconde extrémité du ressort 18. Le vérin 40 peut être mis en action par un dispositif de commande 44 relié à une alimentation électrique, de façon à agir sur le ressort 18, comme il sera explicité ci-après. Le système comporte de plus une unité de blocage et de déblocage 45 de la position occupée par la gouverne 2, l'unité étant solidaire de la structure 8 de l'aéronef et reliée à la timonerie 17. Cette unité 45, représentée en regard de la figure 3 et symbolisée sur la figure 2, comprend un embrayage 46, un moyen de seuil d'effort dudit embrayage et des moyens d'alignement automatique de la position de l'embrayage avec la dernière position de braquage de la gouverne 2, comme il sera explicité ultérieurement. La commande de l'embrayage 46 est effectuée également par le dispositif de commande 44, de façon que l'embrayage soit en position débrayée lorsque le vérin 40 est actif et en position embrayée lorsque le vérin 40 est inactif.

Structurellement, la liaison ntre la timonerie 17 et l'unité 45 est réalisée au moyen d'une bielle 48 articulée à ses extrémités d'une part, en 49 sur la tige 32 par l'intermédiaire d'une patte excentrée 50 (figure 4) parallèle à la patte 33 et d'autre part, en 51 à un levier 52 monté rotatif autour d'un arbre 53 solidaire de la stucture 8 de l'aéronef par l'intermédiaire de deux pattes de fixation 54, disposées aux extrémités respectives de l'arbre 53. Ce dernier porte l'embrayage 46, de façon que la partie fixe 55 de l'embrayage soit solidaire de l'arbre 53 et donc de la structure 8 de l'aéronef et que la partie mobile 56 de l'embrayage puisse se mouvoir par rapport à cet arbre 53.

Lorsque la bielle 30 est actionnée au moyen du palonnier 20, via la transmission par câbles 24, celle-ci provoque la rotation de la tige 32 dans les paliers 25 autour de son axe vertical, qui, à son tour, entraîne simultanément le déplacement de la bielle 48, qui fait ainsi office de bielle de recopie.

Selon l'invention, le moyen à seuil d'effort permet lorsque ledit embrayage est en position embrayée, un déplacement relatif de la timonerie 17 et par conséquent de la gouverne 2, via le volet compensateur 14 et le ressort 18, si le pilote exerce sur l'organe de commande 16 un effort supérieur à un seuil déterminé.

Ainsi, le pilote a la possibilité de modifier le braquage de la gouverne 2, soit en agissant sur le dispositif de commande provoquant la mise en action de l'actuateur 40 et la libération de l'embrayage 46, soit en agissant directement sur la timonerie 17 par l'intermédiaire de l'organe d'actionnement 16 en exerçant sur celui-ci un effort supérieur à celui exercé par le moyen à seuil d'effort, bien que l'embrayage soit en position embrayée. L'effort exercé par ledit seuil sur la timonerie doit être suffisant pour éviter l'apparition d'une instabilité de l'aéronef autour de l'axe de roulis, mais en revanche, l'effort exercé par le pilote pour dépasser la valeur du seuil doit être relativement faible pour qu'il puisse manoeuvrer sans difficulté la timonerie et par conséquent la gouverne.

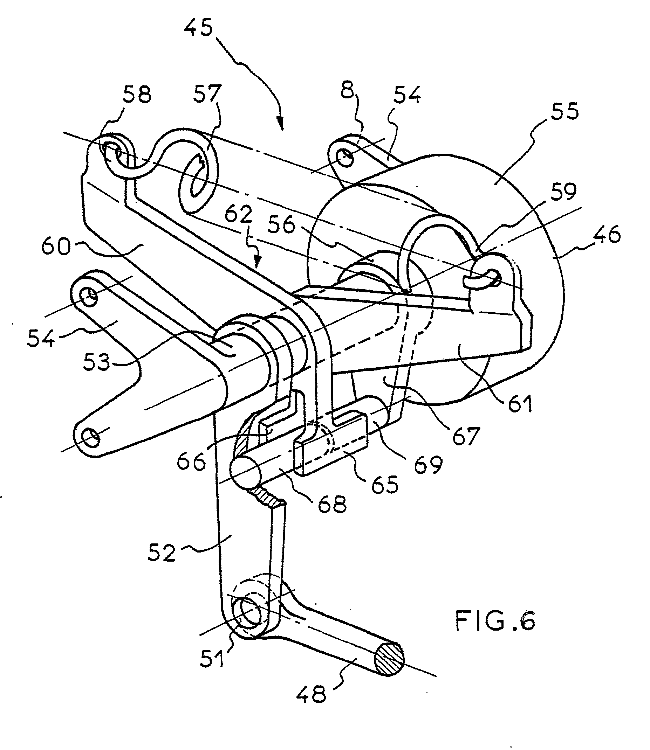

Sur la figure 6, un ressort 57 permet de fournir un tel seuil d'effort. Les extrémités 58 et 59 dudit ressort 57 sont chacune reliées à une extrémité d'une des branches 60 et 61 d'un ciseau 62. Lesdites branches 60 et 61 sont montées rotatives autour de l'arbre 53 et leurs extrémités libres évasées 65 et 66, opposées aux précédentes, coopèrent avec le levier 52 lié à la bielle 48 et avec une patte 67 lié à la partie mobile 56 de l'embrayage 46.

Les extrémités libres 65 et 66 des branches 60 et 61 sont disposées de part et d'autre de pions 68 et 69. Le pion 68 est solidaire du levier 52 monté rotatif autour de l'arbre 53 et le pion 69 est solidaire de la patte 67 lié à l'embrayage 46. Les extrémités libres 65 et 66 des branches du ciseau 62 sont pressées contre les pions 68 et 69 grâce au moyen élastique générateur de seuil d'effort constitué par le ressort 57. Ainsi, le moyen d'alignement automatique de la position de l'embrayage 46 avec la dernière position occupée par le timonerie 17 correspondant à la dernière position occupée par la gouverne, comportant les deux pions parallèles à l'arbre 53, mit en oeuvre le ressort 57, ainsi que les extrémités libres 65 et 66 des branches 60 et 61 du ciseau opposées à celles reliées au ressort 57. Ces extrémités libres 65 et 66 coopèrent, par le pion 68, avec ladite timonerie 17 reliée à la gouverne 2 et par le pion 69, avec la patte 67 liée à la partie mobile 56 de l'embrayage 46. Grâce à cet agencement, le pilote est assuré que la partie mobile 56, dès qu'elle est en position débrayée par rapport à la partie fixe 57 et avant de basculer dans la position embrayée verrouillant la timonerie 17, (positions obtenues grâce à l'action du pilote sur le dispositif de commande 44), est alignée avec la dernière position occupée par la timonerie par suite de l'action de rappel du ressort 57 relié aux branches du ciseau coopérant avec les pions 68 et 69.

Le dispositif de commande 44 du vérin 40 et de l'embrayage 46 (figure 2) comporte une manette de commande 72 située dans le poste de pilotage de l'aéronef, pouvant occuper d'une part, une position de repos pour laquelle l'embrayage 46 est en position embrayée et le vérin électrique 40 inactif et d'autre part, deux positions de travail pour lesquelles l'embrayage 46 est en position débrayée et le vérin actif.

Chacune des positions de travail correspond à un sens de braquage de la gouverne 2 donné par la rentrée ou la sortie de la tige du vérin 40. A cet effet, la manette de commande 72 peut être mise en contact avec un premier contacteur 73 relié à une alimentation générale 71 par une liaison 74 comportant un interrupteur de commande générale 75. La sortie 76 du premier contacteur 73 est reliée d'une part, au vérin électrique 40 au moyen d'une liaison 77 et d'autre part, à l'embrayage 46 à commande électrique, au moyen d'une liaison 78 à travers une diode 79, agencée entre la sortie 73 et la liaison 78.

La manette de commande 72 peut être mise également en contact avec un second contacteur 80, disposé en parallèle avec le premier 73, et relié à l'alimentation générale 71 par la même liaison 74. La sortie 81 du second contacteur 80 est reliée d'une part, au vérin électrique 40 au moyen d'une liaison 82 et d'autre part, à l'embrayage 46 au moyen de la même liaison 78, mais à travers une diode 83 agencée entre la sortie 81 et la liaison 78.

La liaison 78 de commande de l'embrayage 46 est commune quelle que soit la position de travail occupée par les contacteurs. Les deux diodes 79 et 83, montées en opposition, empêchent l'alimentation simultanée du vérin 40 par les liaisons respectivement 77 et 82 permettant chacune le déplacement dans un sens de la tige du vérin 40.

La mise en action du système s'effectue lorsque le pilote désire modifier la trajectoire de l'aéronef.

Au préalable, la gouverne 2, le volet compensateur 14 et l'ensemble de la timonerie 17 sont bloqués dans leur dernière position de braquage par l'unité 45, la position de braquage pouvant être celle corresondant à l'alignement de la gouverne dans le plan de l'empennage. Cette dernière position de braquage est maintenue par l'embrayage 46 en position embrayée, la partie mobile 56 de celui-ci étant solidaire de la partie fixe 55. Le dispositif de commande 44 est évidemment dans sa position de repos. La position du pion 69, lié à la patte 67 de la partie mobile, est alignée avec celle du pion 68 du levier 52 articulé sur la bielle 48 de la timonerie, dont la position correspond à celle de la gouverne 2.

L'alignement de ces deux pions est obtenu par la mise en oeuvre du ressort à seuil d'effort 57 relié aux branches 60 et 61 du ciseau 62 dont les extrémités libres 65 et 66 pressent les deux pions 68 et 69 de façon à rappeler le pion 69 lié à l'embrayage 46 dans l'alignement du pion 68 lié à la timonerie 17.

Dans le case où le pilote désire modifier la position de braquage de la gouverne et garder ensuite cette nouvelle position afin de maintenir l'aéronef sur une trajectoire tout en relâchant son effort sur l'organe de commande volontaire 20, il agit sur le dispositif de commande 44 pour commander simultanément le vérin 40 et le débrayage de l'embrayage 46. Au préalable, le pilote a mis sous tension le dispositif 44 par l'interrupteur 75, et agit sur la manette 72 appuyant par exemple sur le contacteur 73, ce qui a pour conséquence d'une part, de provoquer la sortie de la tige du vérin 40 alimenté par la liaison 77 et d'autre part, de débrayer la partie mobile 56 de la partie fixe 55 de l'embrayage 46 alimenté par la liaison 78.

L'action du pilote sur le palonnier 20 provoque le déplacement de la bielle 30 par l'intermédiaire du jeu de biellettes 23 et de la transmission par câbles 24, puis la rotation de la tige 32 dans les paliers 25, provoquant aussi le déplacement de la bielle 48 et donc du levier 52. La manivelle 38, solidaire de la tige 32 est entraînée en rotation et assure par son articulation 36 le déplacement de la bielle 35 liée au volet compensateur 14, à travers le ressort 18 relié à ladite bielle 35. Le volet 14 pivote autour de son axe 13 et sous l'action des forces aérodynamiques agissant sur ledit volet compensateur 14 et sous l'action du ressort 18 et du vérin 40 relié au ressort 18, la gouverne 2 prend alors la nouvelle position de braquage désirée par le pilote. L'action du vérin 40 tend ainsi à diminuer, voire annuler, l'effort que le pilote exerce sur le palonnier 20 correspondant à l'effort exercé sur le ressort 18.

Lorsque la nouvelle position de braquage de la gouverne est atteinte, le pilote agit sur le dispositif de commande 44 ramenant la manette 72 en position de repos et relâche son effort sur le palonnier 20. Dès cet instant, le vérin 40, n'étant plus alimenté, se verrouille et garde sa nouvelle position et l'embrayage bascule dans la position embrayée en étant aligné avec la nouvelle position occupée par la timonerie 17 correspondant à la nouvelle position de braquage de la gouverne. En effet, avant que l'embrayage ne bascule dans la position embrayée, la bielle 48 liée à la tige 32 s'est déplacée en provoquant la rotation du levier 52 sur lequel elle est articulée. Le pion 68, fixé à ce levier 52, entraîne alors l'extrémité libre évasée 66 de la branche 61 du ciseau 62, et sous l'action du ressort 57, reliant les deux branches 60 et 61, celui-ci rappelle l'autre branche 60 du ciseau provoquant ainsi, grâce à l'extrémité libre évasée 65 de cette branche, le rappel du pion 69, lié à la patte 67 de la partie mobile 56 de l'embrayage 46, dans l'alignement du pion 68.

La gouverne 2 est alors en position d'équilibrage aérodynamique et l'aéronef poursuit alors la nouvelle trajectoire définie par le pilote.

Comme il a été mentionné précédemment, le pilote peut agir également sur la position de braquage de la gouverne sans utiliser le dispositif de commande 44, grâce au ressort à seuil d'effort 57 qui autorise, si le pilote exerce un effort sur le palonnier supérieur à celui délivré par ledit ressort 57, la modification de la position de braquage de la gouverne 2. Avantageusement, grâce aux pions 68 et 69 qui permettent de réaligner la position de la partie mobile de l'embrayage avec la position occupée par la timonerie, par l'intermédiaire des branches 60 et 61 du ciseau 62 et du ressort 57, la valeur du seuil d'effort donnée par ce ressort, que le pilote doit vaincre lorsqu'il désire modifier le braquage de la gouverne sans passer par le dispositif de commande débrayant l'embrayage, est toujours identique.

Dans ce cas de figure où le pilote désire corriger momentanément la position de la gouverne en agissant directement sur la timonerie sans se servir du dispositif de commande 44, il exerce sur l'une des pédales du palonnier 20 un effort supérieur à celui délivré par le ressort 57. Cela permet, par l'intermédiaire de l'ensemble de la timonerie 17, au ressort 18 de se comprimer ou de se détendre en provoquant un braquage du volet compensateur 14 autour de l'axe 13 grâce à la bielle 35, et par conséquent un braquage en sens opposé de la gouverne 10 autour de l'axe 10 d'articulation. Le vérin 40 joue alors le rôle d'une bielle rigide articulée.

Si le pilote détermine que la nouvelle position temporaire de braquage a permis de corriger suffisamment la trajectoire de l'aéronef, il relâche alors son effort sur le palonnier, ce qui ramène le pion 68 lié à la trimonerie dans une position alignée avec le pion 69 lié à l'embrayage par l'intermédiaire des branches du ciseau 61 et du ressort 57 qui revient dans sa position initiale.

En revanche, si le pilote désire garder cette nouvelle position de braquage de la gouverne pour relâcher son effort sur le palonnier, il agit sur la manette 72 du dispositif de commande 44 ayant pour effet de commander le mouvement de sortie ou de rentrée du vérin 40, et de libérer l'embrayage 46.

Une fois la position d'équilibre de la gouverne avec le volet compensateur obtenu, le pilote bascule la manette 72 en position de repos entraînant alors le verrouillage du vérin 40 et la solidarisation de la timonerie 17 avec l'embrayage 46, dont la partie mobile 56 s'est réalignée à la nouvelle position de la timonerie correspondant à la position de braquage actuelle de la gouverne.

Au regard de ce qui a été décrit, l'invention atteint l'objectif de pouvoir associer sur une même surface aérodynamique les fonctions dites "tab à ressort" et "trim" avec de plus des moyens à seuil d'effort et d'alignement.

## Revendications

1 - Système pour la commande d'une surface aérodynamique (2), montée mobile sur un aéronef (1) de façon à pouvoir librement pivoter autour d'un axe fixe (10) et pourvue d'un volet compensateur (14) lui-même articulé sur le bord de fuite (12) de ladite surface aérodynamique (2), ledit système étant tel que des moyens élastiques de liaison (18) sont prévus entre ledit volet compensateur (14) et ladite surface aérodynamique (2) et que ledit volet compensateur (14) est directement actionnable par le pilote, par l'intermédiaire d'un organe d'actionnement volontaire (16) et d'une timonerie (17),
caractérisé :
- en ce qu'il comporte :
. un actuateur (40) interposé entre lesdits moyens élastiques de liaison (18) et ladite surface aérodynamique (2) ;
. un dispositif de commande (44) actuateur (40) ; et
. un embrayage (46) reliant la structure de l'aéronef à ladite timonerie (17) ;
- et en ce que ledit dispositif de commande (44) de l'actuateur commande également ledit embrayage (46), de façon que celui-ci soit en position débrayée lorsque ledit actuateur est actif et en position embrayée lorsque ledit actuateur est inactif.

2 - Système selon la revendication 1, caractérisé en ce que, entre ladite timonerie (17) et ledit embrayage (46) est prévu un dispositif à seuil (57,60,61, 65,66) permettant, lorsque ledit embrayage est en position embrayée, un déplacement relatif de la timonerie (17) si le pilote exerce sur ledit organe de commande volontaire (16) un effort supérieur à un seuil déterminé.

3 - Système selon la revendication 2, caractérisé en ce que ledit dispositif à seuil comporte un moyen élastique (57) fournissant le seuil d'effort, les extrémités (58 et 59) dudit moyen élastique (57) étant reliées respectivement aux extrémités des branches (60 et 61) d'un ciseau (62) aptes à pivoter autour d'un arbre (53) solidaire de la structure de l'aéronef, les extrémités libres (65 et 66) desdites branches opposées aux précédentes coopérant respectivement avec ladite timonerie (17) et avec ledit embrayage (46).

4 - Système selon l'une des revendications 1 à 3, caractérisé en ce qu'il comporte des moyens d'alignement automatique de l'embrayage (46) avec la dernière position occupée par ladite timonerie (17) correspondant à la dernière position occupée par ladite surface aérodynamique (2).

5 - Système selon la revendication 4, caractérisé en ce que lesdits moyens d'alignement automatique mettent en oeuvre ledit moyen élastique générateur de seuil d'effort (57), ainsi que les extrémités libres (65,66) des branches dudit ciseau (62) opposées à celles reliées audit moyen élastique, lesdites extrémités libres (65,66) coopérant à cet effet, respectivement avec ladite timonerie (17) et avec ledit embrayage (46).

6 - Système selon l'une des revendications 4 ou 5, caractérisé en ce que lesdits moyens d'alignement automatique comportent deux pions (68 et 69) dont l'un (68) est solidaire d'un levier (52) monté rotatif autour dudit arbre de rotation (53) dudit ciseau (62), ledit levier (52) étant articulé à ladite timonerie (17), et dont l'autre (69) est solidaire dudit embrayage (46), les extrémités libres (65,66) des branches (60, 61) du ciseau étant disposées de part et d'autre desdits pions, pressées vers ceux-ci par ledit moyen élastique générateur de seuil d'effort (57) et susceptibles, chacune, de s'appliquer sur les deux pions (68 et 69).

7 - Système selon la revendication 6, caractérisé en ce que les deux pions (68 et 69) sont parallèles audit arbre (53).

8 - Système selon l'une des revendications précédentes, caractérisé en ce que ledit dispositif de commande (44) de l'actuateur (40) et de l'embrayage (46) est constitué d'une manette de commande (72) susceptible d'être actionnée par ledit pilote, ladite manette pouvant occuper d'une part, une position de repos pour laquelle ledit embrayage (46) est en position embrayée et ledit actuateur (40) inactif et d'autre part, deux positions de travail pour lesquelles ledit embrayage (46) est en position débrayée et ledit actuateur (40) actif, chacune desdites positions de travail correspondant à un sens de braquage de ladite surface aérodynamique (2).

9 - Système selon la revendication 8, caractérisé en ce que, pour chaque position de travail, ladite manette (72) est basculée sur l'un de deux contacteurs électriques (73,80) disposés en parallèle et alimentés par une alimentation électrique unique (71).

10 - Système selon l'une quelconque des revendications 4 à 9, caractérisé en ce qu'il comporte une unité rassemblant ledit embrayage (46), ledit moyen élastique (57) à seuil d'effort et lesdits moyens d'alignement automatique de la position de l'embrayage (46) avec la dernière position occupée par ladite timonerie (17) correspondant à la dernière position occupée par ladite surface mobile (2).

**Patentansprüche**

1. Steuersystem einer aerodynamischen Fläche (2), die an einem Flugzeug (1) derart beweglich angebracht ist, daß sie um eine feststehende Achse (10) frei schwenken kann, und die mit einem Kompensationsflügel (14) versehen ist, der selbst an der Abströmkante (12) der aerodynamischen Fläche (2) schwenkbar gelagert ist, wobei elastische Verbindungsmittel (18) zwischen dem Kompensationsflügel (14) und der aerodynamischen Fläche (2) vorgesehen sind und der Kompensationsflügel (14) mittels eines freiwilligen Betätigungsorgans (16) und eines Gestänges (17) durch den Piloten direkt betätigbar ist, dadurch gekennzeichnet,
– daß vorgesehen sind:
ein Stellmotor (40), der zwischen den elastischen Verbindungsmitteln (18) und der aerodynamischen Fläche (2) angeordnet ist;
eine Steuervorrichtung (44) des Stellmotors (40); und
eine Kupplung (46) welche die Struktur des Flugzeugs mit dem Gestänge (17) verbindet;
– und daß die Steuervorrichtung (44) des Stellmotors gleichzeitig die Kupplung (46) in der Weise steuert, daß diese eine ausgekuppelte Stellung einnimmt, während der Stellmotor aktiv ist, und eine gekuppelte Stellung einnimmt, während der Stellmotor inaktiv ist.

2. Steuersystem nach Anspruch 1, dadurch gekennzeichnet, daß zwischen dem Gestänge (17) und der Kupplung (46) eine Schwellenvorrichtung (57, 60, 61, 65, 66) vorgesehen ist, welche bei in gekuppelter Stellung befindlicher Kupplung eine Relativbewegung des Gestänges (17) erlaubt, wenn der Pilot auf das freiwillige Betätigungsorgan (16) eine Kraft ausübt, die eine bestimmte Schwelle übersteigt.

3. Steuersystem nach Anspruch 2, dadurch gekennzeichnet, daß die Schwellenvorrichtung die Kraftschwelle liefernde elastische Mittel (57) aufweist, deren Enden (58 und 59) jeweils mit den Enden der Hebel (60 und 61) einer Schere (62) verbunden sind, die an einem an der Struktur des Flugzeugs befestigten Achszapfen (53) schwenkbar gelagert sind, wobei die den vorerwähnten Enden entgegengesetzten freien Enden (65 und 66) der Hebel mit dem Gestänge (17) und mit der Kupplung (46) zusammenwirken.

4. Steuersystem nach einem der Ansprüche 1 bis 3, dadurch gekennzeichnet, daß es Mittel zur automatischen Ausrichtung der Kupplung (46) auf die zuletzt eingenommene Stellung des Gestänges (17) aufweist, welche der zuletzt eingenommenen Stellung der aerodynamischen Fläche (2) entspricht.

5. Steuersystem nach Anspruch 4, dadurch gekennzeichnet, daß die Mittel zur automatischen Ausrichtung sich der elastischen Mittel (57) zur Erzeugung der Kraftschwelle sowie der freien Enden (65, 66) der Hebel der Schere (62), die den mit den elastischen Mitteln (57) verbundenen Enden gegenüberliegen, bedienen und die freien Enden (65, 66) mit dem Gestänge (17) bzw. der Kupplung (46) zusammenwirken.

6. Steuersystem nach einem der Ansprüche 4 oder 5, dadurch gekennzeichnet, daß die Mittel zur automatischen Ausrichtung zwei Stifte (68 und 69) aufweisen, von denen einer (68) an einem Hebel (52) fest angebracht ist, der drehbar auf dem Achszapfen (53) der Schere (62) gelagert und an dem Gestänge (17) angelenkt ist, und daß der andere Stift (69) mit der Kupplung (46) fest verbunden ist, wobei die freien Enden (65, 66) der Hebel (60, 61) der Schere an beiden Längsseiten der Stifte einander gegenüberstehen und mittels der die Kraftschwelle erzeugenden elastischen Mittel (57) gegen die Stifte drücken und jedes Ende sich an beiden Stiften (68 und 69) anlegen kann.

7. Steuersystem nach Anspruch 6, dadurch gekennzeichnet, daß die beiden Stifte (68 und 69) parallel zum Achszapfen (53) verlaufen.

8. Steuersystem nach einem der vorhergehenden Ansprüche, dadurch gekennzeichnet, daß die Vorrichtung (44) zur Steuerung des Stellmotors (40) und der Kupplung (46) einen vom Piloten betätigbaren Steuerhebel (72) aufweist, der einerseits eine Ruhestellung einnehmen kann, bei der die Kupplung (46) sich in gekuppelter Stellung befindet und der Stellmotor inaktiv ist, und andererseits zwei Arbeitsstellungen einnehmen kann, in denen die Kupplung (46) sich in ausgekuppelter Stellung befindet und der Stellmotor aktiv ist, wobei die Arbeitsstellungen jeweils einem Auslenkungssinne der aerodynamischen Fläche (2) entsprechen.

9. Steuersystem nach Anspruch 8, dadurch gekennzeichnet, daß der Steuerhebel (72) in jeder Arbeitsstellung auf einen von zwei elektrischen Schaltern (73, 80) gekippt ist, die in Parallelschaltung aus einer gemeinsamen elektrischen Quelle (71) gespeist sind.

10. Steuersystem nach einem der Ansprüche 4 bis 9, dadurch gekennzeichnet, daß es eine Baueinheit aufweist, welche die Kupplung (46), die elastischen Mittel (57) zur Erzeugung der Kraftschwelle und die Mittel zur automatischen Ausrichtung der Stellung der Kupplung (46) in sich vereinigt, wobei die zuletzt eingenommene Stellung des Gestänges (17) der zuletzt eingenommenen Stellung der mobilen Fläche (2) entspricht.

## Claims

1. System for controlling an aerodynamic surface (2), mounted mobile on an aircraft (1) so as to be able to pivot freely about a fixed axis (10) and provided with a tab (14) itself articulated on the trailing edge (12) of said aerodynamic surface (2), said system being such that elastic connecting means (18) are provided between said tab (14) and said aerodynamic surface (2) and said tab (14) can be directly actuated by the pilot, via a voluntary actuating member (16) and a mechanical linkage (17), characterized in that

— this system comprises:
an actuator (40) interposed between said elastic connecting means (18) and said aerodynamic surface (2);
a device (44) for controlling said actuator (40); and
a clutch (46) connecting the structure of the aircraft to said mechanical linkage (17);
— and in that said device (44) for controlling the actuator also controls said clutch (46), so that the latter is in disengaged position when said actuator is active and in engaged position when said actuator is inactive.

2. System according to claim 1, characterized in that between said mechanical linkage (17) and said clutch (46) there is provided a threshold device (57, 60, 61, 65, 66) allowing, when said clutch is in engaged position, a relative displacement of the linkage (17) if the pilot exerts on said voluntary control member (16) an effort greater than a determined threshold.

3. System according to claim 2, characterized in that said threshold device comprises an elastic means (57) furnishing the threshold of effort, the ends (58 and 59) of this elastic means (57) being respectively connected to the ends of the legs (60 and 61) of a scissor element (62) adapted to pivot about a shaft (53) fast with the structure of the aircraft, the free ends (65, 66) of said legs opposite the preceding ones respectively cooperating with said mechanical linkage (17) and with said clutch (46).

4. System according to one of claims 1 to 3, characterized in that it comprises means for automatically aligning the clutch (46) with the last position occupied by said mechanical linkage (17) corresponding to the last position occupied by said aerodynamic surface (2).

5. System according to claim 4, characterized in that said automatic alignment means employ said elastic means (57) which generates the threshold of effort, as well as the free ends (65, 66) of the legs of said scissor element (62) opposite those connected to said elastic means, said free ends (65, 66), to that end, cooperating respectively with said mechanical linkage (17) and with said clutch (46).

6. System according to one of claims 4 or 5, characterized in that said automatic alignment means comprise two pins (68 and 69) of which one (68) is fast with a lever (52) mounted to rotate about said shaft of the scissor element (62), said lever (52) being articulated on said mechanical linkage (17), and of which the other pin (69) is fast with said clutch (46), the free ends (65, 66) of said legs (60, 61) of the scissor element being disposed on either side of said pins, pressed theretowards by said threshold generating elastic means (57) and each capable of being applied on the two pins (68 and 69).

7. System according to claim 6, characterized in that the two pins (68 and 69) are parallel to said shaft (53).

8. System according to any one of preceding claims, characterized in that said device (44) for controlling the actuator (40) and clutch (46) is constituted by a control lever (72) capable of being actuated by the pilot, said lever being adapted to occupy on the one hand, a rest position for which said clutch (46) is in engaged position and said actuator (40) inactive and, on the other hand, two work positions for which said clutch (46) is in disengaged position and said actuator (40) active, each of said work positions corresponding to a direction of deflection of said aerodynamic surface (2).

9. System according to claim 8, characterized in that for each work position, said lever (72) is switched on one of two electric contactors (73, 80) disposed in parallel and supplied by a single electrical supply (71).

10. System according to any one of claims 4 to 9, characterized in that it comprises a unit combining said clutch (46), said elastic effort threshold means (57), and said means for automatically aligning the position of the clutch (46) with the last position occupied by said mechanical linkage (17) corresponding to the last position of the mobile surface (2).

FIG.1

FIG.3

FIG.4

FIG.5

FIG.2

EP 0 250 293 B1

FIG.6